# EUROPÄISCHE PATENTSCHRIFT

(11) **EP 3 957 170 B1**
(45) Veröffentlichungstag und Bekanntmachung des Hinweises auf die Patenterteilung: **30.08.2023**
(21) Anmeldenummer: 21189748.3
(22) Anmeldetag: 04.08.2021
(51) Int. Cl.: A01K 13/00, B05B 1/20, B05B 15/652

(54) **VORRICHTUNG ZUM REINIGEN VON TIEREN, INSBESONDERE TIERBEINEN**
DEVICE FOR CLEANING ANIMALS, PARTICULARLY THE LEGS OF ANIMALS
DISPOSITIF DE NETTOYAGE DES ANIMAUX, EN PARTICULIER DES PATTES D'ANIMAUX

(30) Priorität: 19.08.2020 DE 102020121810
(43) Veröffentlichungstag der Anmeldung: 23.02.2022
(73) Patentinhaber: Nadler Hartmetalle GmbH, 85235 Odelzhausen (DE)
(72) Erfinder: NADLER, Wolfgang, 85235 Odelzhausen (DE)
(74) Vertreter: Heilein, Ernst-Peter

(56) Entgegenhaltungen:
- DE-U1- 20 308 305
- US-A- 3 185 397
- US-A1- 2016 255 809
- US-B1- 7 237 277

## Beschreibung

Die vorliegende Erfindung betrifft eine Vorrichtung zum Reinigen von Tieren, insbesondere von Tierbeinen, wenigstens umfassend: eine Brause mit wenigstens einer Düse zur Ausgabe von Flüssigkeit; einen mit der Brause verbundenen ergonomischen Handgriff, und eine, mit dem Handgriff verbundene, Kupplung zur Verbindung der Vorrichtung mit einer Flüssigkeitsquelle, wobei die Kupplung ausgebildet ist, mit wenigstens einer Flüssigkeitsquelle zusammenzuwirken, wobei die Brause einen ersten und einen zweiten Arm umfasst, sodass von den beiden Armen zumindest abschnittsweise ein Innenraum der Brause eingegrenzt wird; wobei der erste Arm und der zweite Arm über eine Öffnungsmechanik, gegeneinander bewegbar, miteinander wirkverbunden sind, sodass der erste Arm und der zweite Arm mit Hilfe der Öffnungsmechanik von einer geschlossenen Stellung, bei der sich der erste Arm und der zweite Arme jeweils sowohl an ihren distalen Enden als auch an ihren proximalen Enden nahe sind, in wenigstens eine offene Stellung, bei der der erste Arm und der zweite Arme an ihren distalen Enden voneinander entfernt sind, überführbar ist; wobei die wenigstens eine Düse derart an einem der Arme der Brause angeordnet ist, dass sie einen Flüssigkeitsstrahl erzeugt, der in den Innenraum der Brause gerichtet ist, und wobei der erste Arm und der zweite Arm über die Öffnungsmechanik mit dem Handgriff verbunden sind, wobei der Handgriff wenigstens einen Hebel zur Betätigung der Öffnungsmechanik umfasst.

Die Reinigung bzw. das Waschen von Tieren, insbesondere von Tierbeinen, darunter z. B. Hunde oder Pferde, kann ein leidiger, mühevoller und zeitaufwendiger Vorgang sein. Das Reinigungsergebnis ist zudem oft unzufriedenstellend und aufgrund des Fehlens passender Reinigungsutensilien oftmals mit hohem manuellem Aufwand verbunden.

Zur Erleichterung der Reinigung von Haustierbeinen ist in diesem Zusammenhang aus der US 2019 / 002 92 24 A1 eine Vorrichtung zum Reinigen von Haustierpfoten bekannt. Die darin beschriebene Vorrichtung hat die Form eines Zylinders mit einer offenen und einer geschlossenen Stirnseite. Innerhalb des Zylinders befinden sich Reinigungsborsten. Zur Reinigung einer Tierpfote muss der Tierhalter die Pfote des Tieres in den Zylinder hineinstecken und diesen dann auf und ab bewegen, sodass die Reinigungsborsten Schmutz von der jeweiligen Tierpfote abreiben können, wobei sich der Schmutz dann am Boden der zylindrischen Vorrichtung sammelt. Die hier beschriebene Vorrichtung eignet sich hauptsächlich für trockenen Schmutz und Staub an Tierpfoten, da feuchter, schmieriger Schmutz durch die Reinigungsborsten eher auf der Tierpfote verrieben als von ihr entfernt wird. Zudem muss das auf diese Weise gereinigte Tier bei der Reinigung "mithelfen" indem es möglichst stillhält und die Prozedur über sich ergehen lässt, was natürlich oftmals schwer zu realisieren sein dürfte.

Die US 2016 / 001 50 00 A1 (bzw. die als "continuation-in-part" dieser Anmeldung weitergeführte US 2016 / 025 58 09 A1) offenbart eine tragbare Vorrichtung zum Befeuchten, Waschen und/oder Abspülen von Tieren, Gegenständen und Personen, bestehend aus einem Wasser- und/oder Seifen-Spender und einem sog. Einkapselungselement, welches einen 360°- Wassernebel bzw. Seifenlaugennebel erzeugt. Das beschriebene Einkapselungselement muss dabei das zu reinigende Objekt umgeben. Die US 2016 / 001 50 00 A1 beschreibt dabei zwei prinzipielle Varianten des Einkapselungselements, eine geschlossene, näherungsweise ringförmige Variante und eine offene, als hufeisenförmig bzw. "C"-förmig beschriebene Variante, deren Öffnung zur Gewährleistung des 360°-Sprühnebels vergleichsweise eng ausgestaltet sein muss. Im Fall eines zu reinigenden Tieres muss dieses entweder durch die näherungsweise ringförmige Öffnung des Einkapselungselements hindurchschlüpfen oder, bei der offenen Variante, gegebenenfalls seinen Körper, seinen Kopf oder eines seiner Beine durch die vergleichsweise enge Öffnung einfädeln bzw. zulassen, dass dies geschieht. Auch in diesem Fall ist nachteilig wieder die Mithilfe des Tieres bei der Reinigung notwendig. Zudem ist die Öffnung bzw. der Durchmesser des Einkapselungselements und damit die Maximalgröße des zu reinigenden Objektes oder Tieres vorgegeben. In der US 2016 / 001 50 00 A1 ist dazu zwar vorgesehen, dass das Einkapselungselement mehrteilig ausgebildet sein und dadurch in seiner Größe verändert werden kann, allerdings Bedarf dies nachteilig gewisser zeitaufwendiger Umbauarbeiten.

Zusätzlich ist aus der DE 20 2008 009 662 U1 eine Schweifwaschdüse für Pferde und Tiere bekannt, welche aus einem näherungsweise ringförmigen Düsenträger und einem Griffstück besteht, welches an einem Ende des Düsenträgers angeordnet ist. Über eine Wasserzufuhr kann die Schweifwaschdüse mit Wasser versorgt werden, welches durch Feindüsen auf den Schweif eines Tieres, speziell eines Pferdes, welcher sich innerhalb des Düsenträgers befindet, gesprüht werden kann. Der hier beschriebene Düsenträger weist eine relativ enge Öffnung zum Einführen des Schweifes auf und ist in seinem Durchmesser unveränderbar ausgebildet und somit nachteilig in seiner Maximalgröße beschränkt. Zudem muss auch hier das jeweilig zu reinigende Tier wieder nachteilig ein Einführen in den bzw. ein Hindurchschlüpfen durch den Düsenträger zulassen.

Darüber hinaus seien noch die DE 203 08 305 U und die US 3 185 397 A in diesem Zusammenhang erwähnt.

Schließlich ist aus der US 7 237 277 B1 eine Kombination von Bürsten mit einziehbaren Bosten und einer Flüssigkeitsquelle bekannt.

Aufgabe der vorliegenden Erfindung ist es deshalb, eine im Vergleich zum Stand der Technik verbesserte Vorrichtung zum Reinigen von Tieren, insbesondere von Tierbeinen, bereitzustellen, welche weitgehend ohne Mithilfe des zu reinigenden Tieres auskommt. Die Vorrichtung soll einfach und komfortabel einsetzbar sein und schnell an verschiedene Tiergrößen bzw. Tierbeingrößen angepasst werden können.

Diese Aufgabe wird durch eine Vorrichtung zum Reinigen von Tieren, insbesondere von Tierbeinen, mit den Merkmalen des Patentanspruchs 1 gelöst. Vorteilhafte Ausgestaltungen und Weiterbildungen, welche jeweils einzeln oder in Kombination miteinander einsetzbar sind, sind Gegenstand der abhängigen Ansprüche.

Eine erfindungsgemäße Vorrichtung zum Reinigen von Tieren, insbesondere von Tierbeinen, zeichnet sich gegenüber Vorrichtungen des Stands der Technik dadurch aus, dass wenigstens einer der Arme der Brause wenigstens eine Einzeldüse umfasst,
- wobei die wenigstens eine Einzeldüse am distalen Ende des jeweiligen Armes angeordnet ist,
- und wobei die wenigstens eine Einzeldüse so eingerichtet ist, dass sie einen Flüssigkeitsstrahl erzeugt, der auch bei geschlossener Stellung der Arme von dem Innenraum der Brause weg in Gegenrichtung zum proximalen Ende des jeweiligen Armes, an dem die Einzeldüse angeordnet ist, gerichtet ist.

Die erfindungsgemäße Vorrichtung gestattet es vorteilhaft, ein zu reinigendes Tier, insbesondere dessen Tierbein, durch Bewegung eines oder beider Arme gegeneinander über die Öffnungsmechanik in den Innenraum der Brause aufzunehmen, ohne dass das Tier sich daran beteiligen muss. Über den Handgriff, insbesondere einen daran angeordneten Hebel, kann die Öffnungsmechanik vorteilhaft einfach und sicher bedient werden. Die Überführung der Vorrichtung von einer geschlossenen Stellung, in der die beiden Arme den Innenraum und damit auch einen darin befindlichen Teil eines Tierkörpers, insbesondere ein Tierbein, nahezu vollständig umschließen in wenigstens eine offene Stellung, bei der wenigstens einer der Arme über die Öffnungsmechanik so gegenüber dem anderen Arm bewegt wird, dass sich die beiden distalen Enden der Arme voneinander entfernen und dadurch eine Öffnung ausbilden, durch die ein Teil eines Tierkörpers, insbesondere ein Tierbein in den Innenraum aufgenommen werden kann, mit Hilfe der Öffnungsmechanik ermöglicht es dem Benutzer vorteilhaft auf komfortabel einfache und schnelle Weise ein Teil eines Tierkörpers, insbesondere ein Tierbein, mit der Vorrichtung zur Reinigung zu umschließen. Das Tier muss dabei weder durch eine das Tier eventuell verängstigende Öffnung hindurchschlüpfen noch muss es besonders stillhalten. Auch eine Berührung des Tieres durch den Benutzer ist nicht erforderlich. Zudem kann die Größe, insbesondere der Durchmesser, des Innenraumes durch die Öffnungsmechanik kontinuierlich vergrößert werden und dadurch vorteilhaft an unterschiedliche Körperdurchmesser, insbesondere Beindurchmesser, angepasst werden. Die Öffnungsmechanik kann darüber hinaus vorzugsweise in verschiedenen offenen Stellungen arretierbar ausgestaltet sein, wodurch unterschiedliche Durchmesser des Innenraumes während der Reinigung vorteilhaft fixiert werden können. Die Düse ermöglicht vorteilhaft die Ausgabe einer Flüssigkeit in Richtung und auf einen im Innenraum befindlichen Teil eines Tierkörpers, insbesondere eines Tierbeines.

Indem erfindungsgemäß wenigstens einer der Arme der Brause wenigstens eine Einzeldüse umfasst, wobei die wenigstens eine Einzeldüse am distalen Ende des jeweiligen Armes angeordnet ist, und wobei die wenigstens eine Einzeldüse so eingerichtet ist, dass sie einen Flüssigkeitsstrahl erzeugt, der auch bei geschlossener Stellung der Arme von dem Innenraum der Brause weg, in Gegenrichtung zum proximalen Ende des jeweiligen Armes an dem die Einzeldüse angeordnet ist, gerichtet ist, ermöglicht eine derartige Einzeldüse es dem Benutzer vorteilhaft punktuell und präzise einzelne Stellen am Tierkörper, insbesondere am Tierbein, so zum Beispiel die Tierpfote, gezielt von Schmutz zu befreien. Dies kann vor der Reinigung im Innenraum und/oder als Nachbehandlung geschehen.

In einer ersten Ausgestaltung der Erfindung ist bevorzugt, dass der erste Arm und/oder der zweite Arm, bevorzugt beide Arme, gebogen ausgebildet sind. Eine bogenförmige Ausgestaltung wenigstens einer der beiden Arme ermöglicht vorteilhaft die Ausbildung eines an die anatomischen Verhältnisse des Tierkörpers, insbesondere des Tierbeins, angepassten Innenraums der Brause.

Besonders bevorzugt ist eine Ausgestaltung, bei der eine Vielzahl von Düsen an der Brause, vorzugsweise an einem oder an beiden Armen der Brause, angeordnet sind. Je mehr Düsen an der Brause, vorzugsweise an einem, besonders bevorzugt an beiden Armen angeordnet sind, desto homogener kann die Ausgabe der Flüssigkeit auf einen Teil eines Tierkörpers, insbesondere auf ein Tierbein, erfolgen. Dabei können die Düsen zueinander ebenfalls vorzugsweise homogen auf dem Arm oder den Armen der Brause angeordnet sein. Darüber hinaus kann dadurch auch die Flüssigkeitsmenge, die pro Zeiteinheit über die Brause ausgegeben wird vorteilhaft erhöht oder auch reduziert werden. Sind beispielsweise an beiden Armen eine Vielzahl von Düsen vom jeweiligen proximalen Ende des entsprechenden Armes bis hin zum jeweiligen distalen Ende des entsprechenden Armes angeordnet und befindet sich die Vorrichtung während der Reinigung in einer geschlossenen Stellung, so kann vorteilhaft der gesamte, im Innenraum befindlichen Teil des Tierkörpers, insbesondere des Tierbeins, rundherum mit Flüssigkeit besprüht und dadurch gereinigt werden. Als Flüssigkeit bietet sich zum einen Wasser an, aber auch eine Seifenlösung oder auch ein Flüssigkeitsgemisch mit desinfizierenden Inhaltsstoffen.

Zudem ist es von Vorteil, wenn die Kupplung ausgebildet ist, mit einem Wasserschlauch, bevorzugt mit einem konventionellen Gartenschlauch, zusammenzuwirken. Dadurch kann die Vorrichtung vorteilhaft beispielsweise mittelbar oder unmittelbar an eine konventionelle Wasserleitung angeschlossen werden. Als Kupplung kann vorzugsweise eine "Gardena^{®}-Kupplung" zum Einsatz kommen. Bei einer mittelbaren Verbindung von der Vorrichtung zur Wasserleitung kann insbesondere zwischen Vorrichtung und Wasserhahn ein Reservoir für verschiedene Zusätze, wie beispielsweise eine Seifenlösung und/oder ein Desinfektionsmittel, vom Wasserstrahl durchströmt werden, wobei die besagten Zusatzstoffe von Wasser aufgenommen, zur Brause transportiert und dort über die Düse, die Düsen und/oder die Einzeldüse vorteilhaft ausgegeben werden können.

Schließlich hat sich eine Ausgestaltung der Erfindung bewährt, bei der an wenigstens einem der Arme der Brause wenigstens eine Bürste, bevorzugt eine Vielzahl von Bürsten, angeordnet sind; wobei die Bürste oder die Bürsten in den Innenraum der Brause hineinreichen. Dabei ist es von Vorteil, wenn die Bürste oder die Bürsten mittels wenigstens eines Bürstenhauses, vorzugsweise mittels so vieler Bürstenhäuser wie Bürsten vorgesehen sind, an wenigstens einem der Arme der Brause angeordnet sind, wobei das Bürstenhaus oder die Bürstenhäuser eingerichtet sind, die Bürsten aus dem Innenraum aufzunehmen und wieder in den Innenraum auszugeben

Sind an wenigstens einem Arm, vorzugsweise an beiden Armen; eine oder mehrere Bürsten vorgesehen, so kann der sich im Innenraum befindlichen Teil des Tierkörpers, insbesondere das Tierbein, zusätzlich zur Reinigung durch Ausgabe von Flüssigkeit vorteilhaft auch mechanisch durch Einwirkung der einen oder mehreren Bürsten gereinigt werden, was das Reinigungsergebnis speziell bei hartnäckig anhaftendem Schutz weiter verbessern kann. Ein Bürstenhaus bzw. eine Vielzahl von Bürstenhäusern, welche eingerichtet sind die Bürsten aus dem Innenraum aufzunehmen und wieder in den Innenraum auszugeben, erlauben vorteilhaft ein Ein- und Ausfahren der Bürsten in den Innenraum hinein bzw. aus diesem heraus und ermöglichen es dem Benutzer dadurch vorteilhaft, je nach Ausmaß der Verschmutzung und/oder der Sensibilität des zu reinigenden Tieres die Vorrichtung an die jeweils vorliegende Situation anzupassen.

Die erfindungsgemäße Vorrichtung ermöglicht vorteilhaft eine Reinigung von Tieren, insbesondere von Tierbeinen, welche weitgehend ohne Mithilfe des zu reinigenden Tieres auskommt. Die Vorrichtung ist einfach und komfortabel einsetzbar und kann schnell an verschiedene Tiergrößen bzw. Tierbeingrößen angepasst werden.

Zusätzliche Einzelheiten und weitere Vorteile der Erfindung werden nachfolgend an Hand bevorzugter Ausführungsbeispiele und in Verbindung mit den beigefügten Zeichnungen beschrieben.

Darin zeigen schematisch:
- Fig. 1: eine erste Ausgestaltung einer Vorrichtung zum Reinigen von Tieren, insbesondere von Tierbeinen, in einer geschlossenen Stellung in einer Draufsicht;
- Fig. 2: die Vorrichtung aus Fig. 1 in einer Seitenansicht;
- Fig. 3: die Vorrichtung aus Fig. 1 in einer offenen Stellung in einer Draufsicht;
- Fig. 4: die Vorrichtung aus Fig. 1 in einer weiteren offenen Stellung in einer Draufsicht;
- Fig. 5: die Vorrichtung aus Fig. 1 in einer geschlossenen Stellung in einer Draufsicht bei der punktuellen Reinigung eines Tierbeines mittels einer erfindungsgemäßen Einzeldüse; und
- Fig. 6: eine zweite Ausgestaltung der Vorrichtung, bei der an beiden Armen Bürsten und Bürstenhäuser angeordnet sind.

Bei der nachfolgenden Beschreibung bevorzugter Ausführungsformen der vorliegenden Erfindung bezeichnen gleiche Bezugszeichen gleiche oder vergleichbare Komponenten.

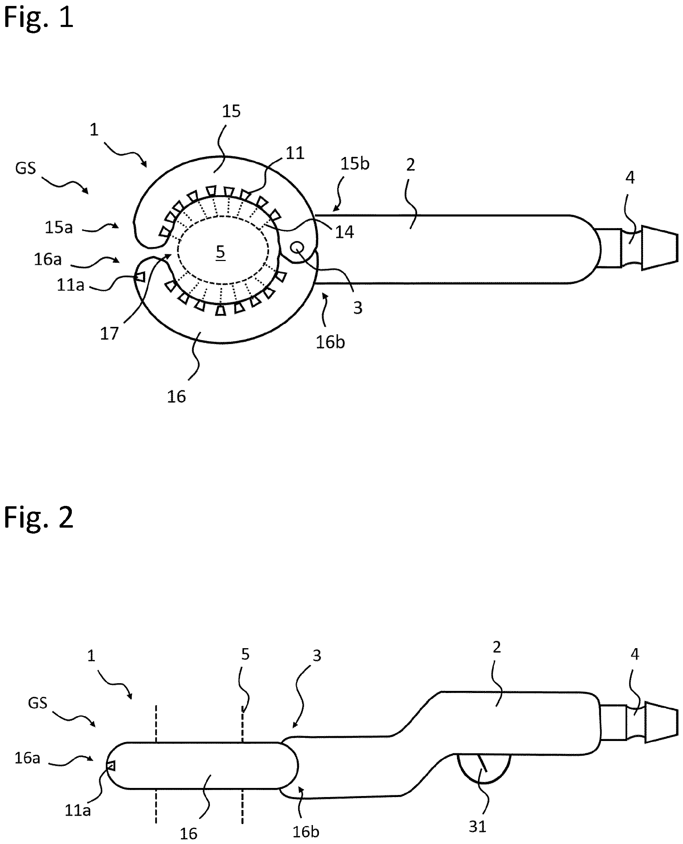

**Fig. 1** zeigt beispielhaft eine erste Ausgestaltung einer Vorrichtung zum Reinigen von Tieren, insbesondere von Tierbeinen 5, in einer geschlossenen Stellung GS in einer Draufsicht.

Die Vorrichtung umfasst wenigstens eine Brause 1 mit wenigstens einer Düse 11 zur Ausgabe von Flüssigkeit; einen mit der Brause 1 verbundenen ergonomischen Handgriff 2, und eine, mit dem Handgriff 2 verbundene, Kupplung 4 zur Verbindung der Vorrichtung mit einer Flüssigkeitsquelle. Die Kupplung 4 ist so ausgebildet, dass sie mit wenigstens einer Flüssigkeitsquelle, insbesondere mit einem Wasserschlauch, bevorzugt mit einem konventionellen Gartenschlauch, zusammenwirken kann. Die Kupplung 4 kann beispielsweise eine "Gardena^{®}-Kupplung" sein, welche mit einem konventionellen Gartenschlauch verbunden und so an einen gewöhnlichen Wasserhahn angeschlossen werden kann.

Die Vorrichtung zeichnet sich dadurch aus, dass die Brause 1 einen ersten 15 und einen zweiten 16 Arm umfasst, so dass von den beiden Armen 15 und 16 zumindest abschnittsweise ein Innenraum 17 der Brause 1 eingegrenzt wird; und wobei der erste Arm 15 und der zweite Arm 16 über eine Öffnungsmechanik 3, gegeneinander bewegbar, miteinander wirkverbunden sind. Der erste Arm 15 oder der zweite Arm 16, bevorzugt beide Arme 15 und 16 wie in Fig. 1 gezeigt, können dabei gebogen ausgebildet sein, wodurch der Innenraum 17 passgenau beispielsweise ein Tierbein 5 (Hundebein, Pferdebein, etc.) aufnehmen kann. Der erste Arm 15 und der zweite Arm 16 können zudem vorzugsweise über die Öffnungsmechanik 3 mit dem Handgriff 2 verbunden sein, wobei der Handgriff 2 wenigstens einen Hebel 31 zur Betätigung der Öffnungsmechanik 3 umfasst.

**Fig. 2** zeigt dazu die Vorrichtung aus Fig. 1 in einer Seitenansicht. Sowohl eine mögliche Ausgestaltung eines Hebels 31 als auch eine mögliche ergonomisch ausgestaltete Form des Handgriffs 2 sind darin zu sehen. Alternativ zum dargestellten Hebel 31 können auch beispielsweise ein oder mehrere Knöpfe, Schalter, etc. zur Betätigung der Öffnungsmechanik 3 am Handgriff 2 angeordnet sein.

Durch eine ergonomische Ausgestaltung des Handgriffs 2, kann der Benutzer zudem vorteilhaft einfach und ohne Positionsveränderung das Tierbein 5, insbesondere ein Hundebein oder Pferdebein, bis zur Pfote bzw. bis zum Huf reinigen

In den Fig. 1 und 2 ist die Ausgestaltung der Vorrichtung jeweils in einer geschlossenen Stellung GS gezeigt, bei der die beiden Arme 15 und 16 das Tierbein 5 nahezu vollständig umgeben.

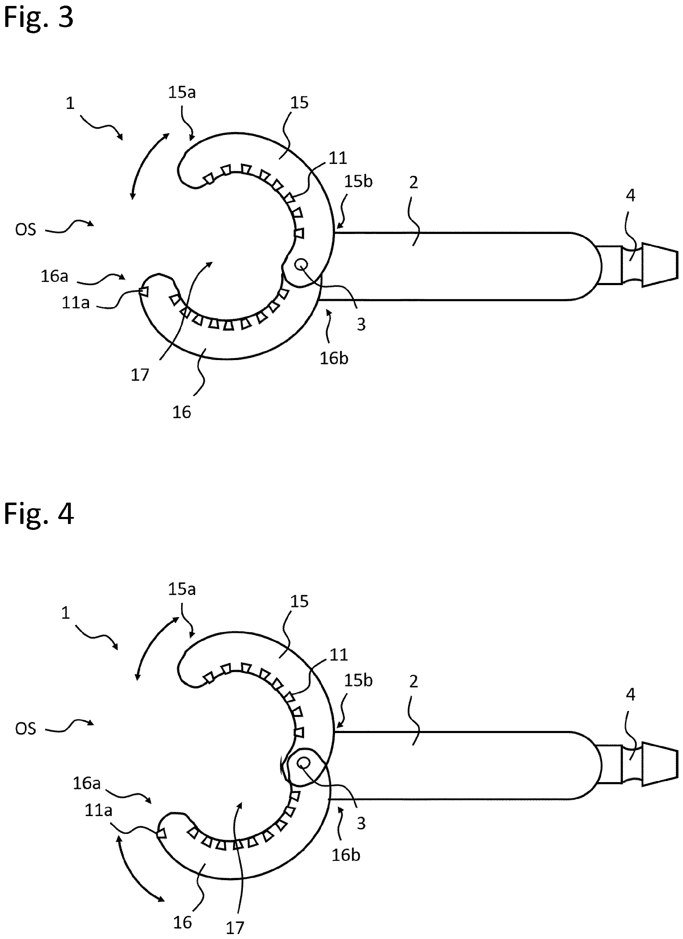

In den **Fig. 3 und Fig.4** ist die Vorrichtung aus Fig. 1 nun jeweils in einer offenen Stellung OS in einer Draufsicht gezeigt, wobei in **Fig. 3** nur der erste Arm 15 bewegt wurde, was durch den gebogenen Doppelpfeil angedeutet werden soll und **Fig. 4** eine weitere offenen Stellung OS gezeigt ist, bei der sowohl der erste Arm 15 als auch der zweite Arm 16 mit Hilfe der Öffnungsmechanik 3 bewegt wurden (zwei Doppelpfeile).

Der erste Arm 15 und der zweite Arm 16 sind mit Hilfe der Öffnungsmechanik 3 von einer geschlossenen Stellung GS (vgl. Fig. 1 und Fig. 2), bei der sich der erste Arm 15 und der zweite Arme 16 jeweils sowohl an ihren distalen Enden 15a und 16a als auch an ihren proximalen Enden 15b und 16b nahe sind, in wenigstens eine offene Stellung OS, bei der der erste Arm 15 und der zweite Arme 16 an ihren distalen Enden 15a und 16a voneinander entfernt sind, überführbar. Als "distales Ende 15a und 16a eines Armes 15 und 16" wird dabei das jeweilige Ende 15a bzw. 16a verstanden, das nicht mit der Öffnungsmechanik 3 wirkverbunden ist, wohingegen als "proximales Ende 15b und 16b eines Armes 15 und 16" dasjenige Ende 15b bzw. 16b verstanden wird, das jeweils mit der Öffnungsmechanik 3 wirkverbunden ist. Die Öffnungsmechanik 3 kann dabei vorzugsweise verschiedene offene Stellungen OS ermöglichen, welche kontinuierlich oder in diskreten Schritten mit Hilfe des Hebels 31 vom Benutzer individuell eingestellt werden können. Dabei kann der Benutzer die Vorrichtung durch dauerhafte Betätigung des Hebels 31 in einer bestimmten offenen Stellung OS halten oder aber die Öffnungsmechanik 3 über den Hebel 31 in einer gewünschten offenen Stellung OS arretieren. Wie aus den Beispielen der Fig. 3 und 4 zu entnehmen, können dabei vorteilhaft beide Arme 15 und 16 gleichzeitig gegeneinander bewegt werden oder aber auch nur der erste Arm 15 oder der zweite Arm 16 (nicht gezeigt) gegenüber dem jeweils anderen Arm 15 bzw. 16. Auf diese Weise lassen sich vorteilhaft durch den Benutzer sowohl der Abstand der distalen Enden 15a und 16a zueinander als auch die Größe bzw. der Durchmesser des Innenraumes 17 individuell an die Größe bzw. den Durchmesser des zu reinigenden Tierbeines 5 nahezu stufenlos und ohne größerer Umbaumaßnahmen vornehmen zu müssen anpassen. Die Reinigung eines Tierbeines 5 durch Ausgabe von Flüssigkeit über die Brause 1, insbesondere über deren Arme 15 und 16, kann dabei vorteilhaft in jeder der gewählten offenen Stellungen OS und auch in der geschlossenen Stellung GS erfolgen.

Die Reinigung eines Tierbeines 5 erfolgt insbesondere über die Ausgabe von Flüssigkeit aus der Brause 1. Wie insbesondere in Fig. 1 zu sehen, ist die wenigstens eine Düse 11 dazu - oder wie hier gezeigt eine Vielzahl von Düsen 11 - derart an einem der Arme 15 und/oder 16 der Brause 1 angeordnet, dass sie - die Düse bzw. die Düsen 11 - einen Flüssigkeitsstrahl 14 erzeugt, der in den Innenraum 17 der Brause 1 gerichtet ist. Eine Ausgestaltung mit einer Vielzahl von Düsen 11 an der Brause 1, welche vorzugsweise an einem oder an beiden Armen 15 und/oder 16 der Brause 1 angeordnet sind, wie insbesondere in den Fig. 1 bis 5 gezeigt, ist dabei besonders bevorzugt, da die Reinigung eines verschmutzen Tierbeines 5 dadurch vorteilhaft besonders gleichmäßig rundherum erfolgen kann. Der Intensität der Reinigung kann mit der erfindungsgemäßen Vorrichtung zudem vorteilhaft über eine Justierung des Flüssigkeitsdrucks an den Verschmutzungsgrad und/oder an die Sensibilität des zu reinigenden Tieres angepasst werden.

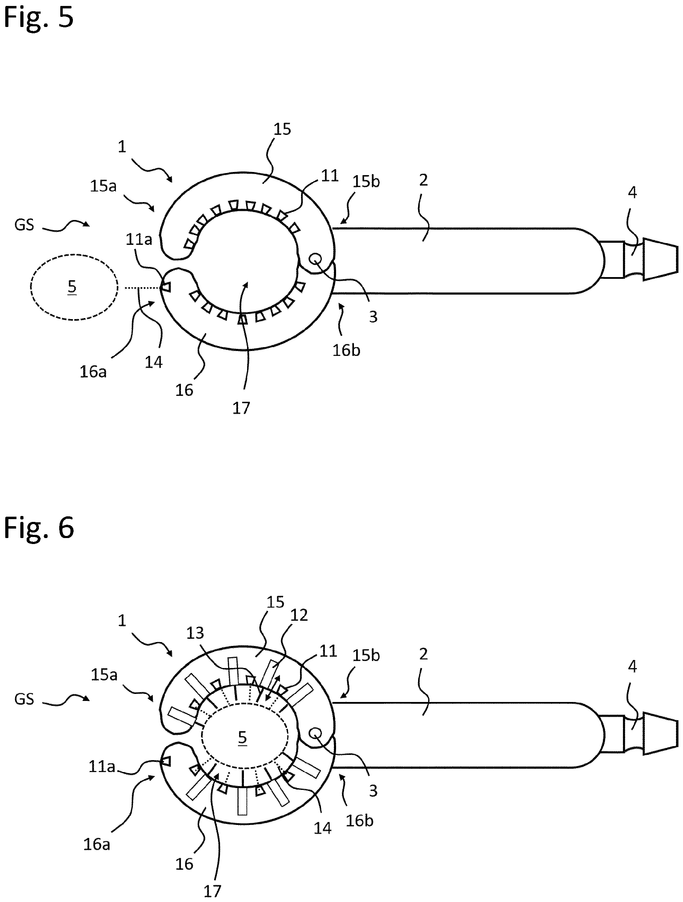

In **Fig. 5** ist die Vorrichtung aus Fig. 1 in einer geschlossenen Stellung GS nun in einer Draufsicht bei der punktuellen Reinigung eines Tierbeines 5 mittels einer Einzeldüse 11a gezeigt.

Wie dargestellt ist es von Vorteil, wenn erfindungsgemäß wenigstens einer der Arme 15 oder 16 der Brause 1 wenigstens eine Einzeldüse 11a umfasst. In Fig. 5 ist eine derartige Einzeldüse 11a am distalen Endes 16a des zweiten Armes 16 gezeigt, es könnte aber natürlich auch eine derartige Einzeldüse 11a am distalen Ende 15a des ersten Armes 15 oder jeweils an beiden Armen 15 und 16 angeordnet sein. Dabei ist die wenigstens eine Einzeldüse 11a so eingerichtet, dass sie einen Flüssigkeitsstrahl 14 erzeugt, der von dem Innenraum 17 der Brause weg in Gegenrichtung zum proximalen Ende 15b bzw. 16b des jeweiligen Armes 15 und/oder 16 an dem die Einzeldüse 11a angeordnet ist, gerichtet ist. Dadurch kann der Benutzer vorteilhaft, wie in Fig.5 zu sehen, ein Tierbein 5 bzw. generell einen Teil des Körpers eines Tieres, das sich außerhalb des Innenraumes 17 befindet, punktuell und präzise reinigen. **Fig. 6** zeigt schließlich eine zweite Ausgestaltung der Vorrichtung, bei der an beiden Armen 15 und 16 Bürsten 13 und Bürstenhäuser 12 angeordnet sind.

An wenigstens einem der Arme 15 oder 16 der Brause 1 - oder wie hier dargestellt an beiden Armen 15 und 16 - kann vorzugsweise wenigstens eine Bürste 13, bevorzugt eine Vielzahl von Bürsten 13, angeordnet sein; wobei die Bürste 13 oder die Bürsten 13 in den Innenraum 17 der Brause 1 hineinreichen. Die Bürste 13 oder die Bürsten 13 können dabei vorteilhaft mittels wenigstens eines Bürstenhauses 12, vorzugsweise mittels so vieler Bürstenhäuser 12 wie Bürsten 13 vorgesehen sind, an wenigstens einem der Arme 15 oder 16 der Brause 1 angeordnet sein, wobei das Bürstenhaus 12 oder die Bürstenhäuser 12 eingerichtet sind, die Bürsten 13 aus dem Innenraum 17 aufzunehmen und wieder in den Innenraum 17 auszugeben. In Fig. 6 sind beispielsweise an beiden Armen 15 und 16 abwechselnd jeweils eine Düse 11 und eine Bürste 13 inkl. zugehörigem Bürstenhaus 12 angeordnet. Das Ausgeben und Aufnehmen der Bürsten 13 aus dem bzw. in das jeweilige Bürstenhaus 12 kann dabei einzeln manuell, gemeinsam manuell und/oder automatisch (einzeln oder gemeinsam), gesteuert insbesondere über den Hebel 31, erfolgen. Die Kombination aus mechanischer Reinigung über die Bürsten 13 und Reinigung durch Flüssigkeit (Wasser, Seifenlösung, Desinfektionsmittel, etc.) mittels der Flüssigkeitsstrahlen 14 kann das Reinigungsergebnis, insbesondere bei sehr starker Verschmutzung, vorteilhaft zusätzlich verbessern.

Die vorliegende Erfindung betrifft eine Vorrichtung zum Reinigen von Tieren, insbesondere von Tierbeinen 5, wenigstens umfassend: eine Brause 1 mit wenigstens einer Düse 11 zur Ausgabe von Flüssigkeit; einen mit der Brause 1 verbundenen ergonomischen Handgriff 2, und eine, mit dem Handgriff 2 verbundene, Kupplung 4 zur Verbindung der Vorrichtung mit einer Flüssigkeitsquelle. Sie zeichnet sich dadurch aus, dass wenigstens einer der Arme 15; 16 der Brause 1 wenigstens eine Einzeldüse 11a umfasst, welche am distalen Ende 15a; 16a des jeweiligen Armes 15; 16 angeordnet und so eingerichtet ist, dass sie einen Flüssigkeitsstrahl 14 erzeugt, der auch bei geschlossener Stellung GS der Arme 15, 16 vom Innenraum 17 der Brause 1 weg in Gegenrichtung zum proximalen Ende 15b; 16b des jeweiligen Armes 15; 16 gerichtet ist. Die erfindungsgemäße Vorrichtung ermöglicht vorteilhaft eine Reinigung von Tieren, insbesondere von Tierbeinen 5, welche weitgehend ohne Mithilfe des zu reinigenden Tieres auskommt. Die Vorrichtung ist einfach und komfortabel einsetzbar und kann schnell an verschiedene Tiergrößen bzw. Tierbeingrößen angepasst werden.

### Bezugszeichenliste

- 1: Brause
- 11: Düse
- 11a: Einzeldüse
- 12: Bürstenhaus
- 13: Bürste
- 14: Flüssigkeitsstrahl
- 15: erster Arm der Brause (1)
- 15a: distales Ende des ersten Armes (15)
- 15b: proximales Ende des ersten Armes (15)
- 16: zweiter Arm der Brause (1)
- 16a: distales Ende des zweiten Armes (16)
- 16b: proximales Ende des zweiten Armes (16)
- 17: Innenraum der Brause (1)

- 2: Handgriff

- 3: Öffnungsmechanik
- 31: Hebel

- 4: Kupplung

- 5: Tierbein

- GS: geschlossene Stellung
- OS: offene Stellung

## Patentansprüche

1. Vorrichtung zum Reinigen von Tieren, insbesondere von Tierbeinen (5), wenigstens umfassend:
- eine Brause (1) mit wenigstens einer Düse (11) zur Ausgabe von Flüssigkeit;
- einen mit der Brause (1) verbundenen ergonomischen Handgriff (2), und
- eine, mit dem Handgriff (2) verbundene, Kupplung (4) zur Verbindung der Vorrichtung mit einer Flüssigkeitsquelle;
- wobei die Kupplung (4) ausgebildet ist, mit wenigstens einer Flüssigkeitsquelle zusammenzuwirken;
- wobei die Brause (1) einen ersten (15) und einen zweiten (16) Arm umfasst,
- sodass von den beiden Armen (15; 16) zumindest abschnittsweise ein Innenraum (17) der Brause (1) eingegrenzt wird;
- wobei der erste Arm (15) und der zweite Arm (16) über eine Öffnungsmechanik (3), gegeneinander bewegbar, miteinander wirkverbunden sind, sodass der erste Arm (15) und der zweite Arm (16) mit Hilfe der Öffnungsmechanik (3) von einer geschlossenen Stellung (GS), bei der sich der erste Arm (15) und der zweite Arme (16) jeweils sowohl an ihren distalen Enden (15a; 16a) als auch an ihren proximalen Enden (15b; 16b) nahe sind, in wenigstens eine offene Stellung (OS), bei der der erste Arm (15) und der zweite Arme (16) an ihren distalen Enden (15a; 16a) voneinander entfernt sind, überführbar ist;
- wobei die wenigstens eine Düse (11) derart an einem der Arme (15; 16) der Brause (1) angeordnet ist, dass sie einen Flüssigkeitsstrahl (14) erzeugt, der in den Innenraum (17) der Brause (1) gerichtet ist;
- und wobei der erste Arm (15) und der zweite Arm (16) über die Öffnungsmechanik (3) mit dem Handgriff (2) verbunden sind, wobei der Handgriff (2) wenigstens einen Hebel (31) zur Betätigung der Öffnungsmechanik (3) umfasst;
**dadurch gekennzeichnet, dass**
- wenigstens einer der Arme (15; 16) der Brause (1) wenigstens eine Einzeldüse (11a) umfasst,
- wobei die wenigstens eine Einzeldüse (11a) am distalen Ende (15a; 16a) des jeweiligen Armes (15; 16) angeordnet ist,
- und wobei die wenigstens eine Einzeldüse (11a) so eingerichtet ist, dass sie einen Flüssigkeitsstrahl (14) erzeugt, der auch bei geschlossener Stellung (GS) der Arme (15, 16) von dem Innenraum (17) der Brause (1) weg in Gegenrichtung zum proximalen Ende (15b; 16b) des jeweiligen Armes (15; 16), an dem die Einzeldüse (11a) angeordnet ist, gerichtet ist.

2. Vorrichtung nach Anspruch 1, **dadurch gekennzeichnet, dass** der erste Arm (15) und/oder der zweite Arm (16), bevorzugt beide Arme (15; 16), gebogen ausgebildet sind.

3. Vorrichtung nach Anspruch 1 oder 2, **dadurch gekennzeichnet, dass** eine Vielzahl von Düsen (11) an der Brause (1), vorzugsweise an einem oder an beiden Armen (15; 16) der Brause (1), angeordnet sind.

4. Vorrichtung nach einem oder mehreren der vorherigen Ansprüche, **dadurch gekennzeichnet, dass** die Kupplung (4) ausgebildet ist, mit einem Wasserschlauch, bevorzugt mit einem konventionellen Gartenschlauch, zusammenzuwirken.

5. Vorrichtung nach einem oder mehreren der vorherigen Ansprüche, **dadurch gekennzeichnet, dass** an wenigstens einem der Arme (15; 16) der Brause (1) wenigstens eine Bürste (13), bevorzugt eine Vielzahl von Bürsten (13), angeordnet sind; wobei die Bürste (13) oder die Bürsten (13) in den Innenraum (17) der Brause (1) hineinreichen.

6. Vorrichtung nach Anspruch 5, **dadurch gekennzeichnet, dass** die Bürste (13) oder die Bürsten (13) mittels wenigstens eines Bürstenhauses (12), vorzugsweise mittels so vieler Bürstenhäuser (12) wie Bürsten (13) vorgesehen sind, an wenigstens einem der Arme (15; 16) der Brause (1) angeordnet sind, wobei das Bürstenhaus (12) oder die Bürstenhäuser (12) eingerichtet sind, die Bürsten (13) aus dem Innenraum (17) aufzunehmen und wieder in den Innenraum (17) auszugeben.

## Claims

1. Device for cleaning animals, in particular legs of animals (5), at least comprising:
- a spray (1) with at least one nozzle (11) for discharging liquid;
- an ergonomic handle (2) which is connected to the spray (1), and
- a coupling (4) which is connected to the handle (2) and which serves for connecting the device to a liquid source;
- wherein the coupling (4) is configured to interact with at least one liquid source;
- wherein the spray (1) comprises a first arm (15) and a second arm (16)
- such that an interior space (17) of the spray (1) is bounded at least partially by the two arms (15; 16);
- wherein the first arm (15) and the second arm (16) are operatively connected to one another via an opening mechanism (3) so as to movable in relation to one another, such that the first arm (15) and the second arm (16) are transferable with the aid of the opening mechanism (3) from a closed position (GS), in which the first arm (15) and the second arm (16) are close both at their distal ends (15a; 16a) and at their proximal ends (15b; 16b) in each case, into at least one open position (OS), in which the first arm (15) and the second arm (16) are at a distance from one another at their distal ends (15a; 16a);
- wherein the at least one nozzle (11) is arranged on one of the arms (15; 16) of the spray (1) in such a way that it generates a liquid jet (14) which is directed into the interior space (17) of the spray (1);
- and wherein the first arm (15) and the second arm (16) are connected to the handle (2) via the opening mechanism (3), wherein the handle (2) comprises at least one lever (31) for actuating the opening mechanism (3);
**characterized in that**
- at least one of the arms (15; 16) of the spray (1) comprises at least one individual nozzle (11a),
- wherein the at least one individual nozzle (11a) is arranged on the distal end (15a; 16a) of the respective arm (15; 16),
- and wherein the at least one individual nozzle (11a) is configured in such a way that it generates a liquid jet (14) which, including in the closed position (GS) of the arms (15; 16), is directed away from the interior space (17) of the spray (1) in the direction opposite to that of the proximal end (15b; 16b) of the respective arm (15; 16), on which the individual nozzle (11a) is arranged.

2. Device according to Claim 1, **characterized in that** the first arm (15) and/or the second arm (16), preferably both arms (15; 16), are/is of curved form.

3. Device according to Claim 1 or 2, **characterized in that** a multiplicity of nozzles (11) is arranged on the spray (1), preferably on one or on both arms (15; 16) of the spray (1).

4. Device according to one of the preceding claims, **characterized in that** the coupling (4) is configured to interact with a water hose, preferably with a conventional garden hose.

5. Device according to one of the preceding claims, **characterized in that** at least one brush (13), preferably a multiplicity of brushes (13), is arranged on at least one of the arms (15; 16) of the spray (1); wherein the brush (13) or the brushes (13) extend into the interior space (17) of the spray (1).

6. Device according to Claim 5, **characterized in that** the brush (13) or the brushes (13) is/are arranged on at least one of the arms (15; 16) of the spray (1) by means of at least one brush compartment (12), preferably by means of as many brush compartments (12) as there are provided brushes (13), wherein the brush compartment (12) or the brush compartments (12) is/are configured to receive the brushes (13) from the interior space (17) and to put them out into the interior space (17) again.

## Revendications

1. Dispositif de toilettage d'animaux, notamment de pattes d'animaux (5), ledit dispositif comprenant au moins :
- une pomme de douche (1) pourvue d'au moins une buse (11) destinée à délivre un liquide ;
- une poignée ergonomique (2) reliée à la pomme de douche (1), et
- un moyen d'accouplement (4) relié à la poignée (2) et destiné à relier le dispositif à une source de liquide ;
- le moyen d'accouplement (4) étant conçu pour coopérer avec au moins une source de liquide ;
- la pomme de douche (1) comprenant un premier bras (15) et un deuxième bras (16),
- de sorte que les deux bras (15 ; 16) délimitent au moins partiellement un espace intérieur (17) de la pomme de douche (1) ;
- le premier bras (15) et le deuxième bras (16) étant reliés fonctionnellement l'un à l'autre, de manière mobile l'un par rapport à l'autre, par le biais d'un mécanisme d'ouverture (3) de sorte que le premier bras (15) et le deuxième bras (16) puissent être transférés à l'aide du mécanisme d'ouverture (3) d'une position fermée (GS), dans laquelle le premier bras (15) et le deuxième bras (16) sont proches l'un de l'autre aussi bien au niveau de leurs extrémités distales (15a ; 16a) que de leurs extrémités proximales (15b ; 16b), jusque dans au moins une position ouverte (OS) dans laquelle le premier bras (15) et le deuxième bras (16) sont éloignés l'un de l'autre au niveau de leurs extrémités distales (15a ; 16a) ;
- l'au moins une buse (11) étant disposée sur l'un des bras (15 ; 16) de la pomme de douche (1) de manière à ce qu'elle génère un jet de liquide (14) qui est dirigé dans l'espace intérieur (17) de la pomme de douche (1) ;
- et le premier bras (15) et le deuxième bras (16) étant reliés à la poignée (2) par le biais du mécanisme d'ouverture (3), la poignée (2) comprenant au moins un levier (31) destiné à actionner le mécanisme d'ouverture (3) ;
**caractérisé en ce que**
- au moins un des bras (15 ; 16) de la pomme de douche (1) comporte au moins une buse individuelle (11a),
- l'au moins une buse individuelle (11a) étant disposée à l'extrémité distale (15a ; 16a) du bras respectif (15 ; 16),
- et l'au moins une buse individuelle (11a) étant conçue pour générer un jet de liquide (14) qui, même lorsque les bras (15, 16) sont en position fermée (GS), est dirigé depuis l'espace intérieur (17) de la pomme de douche (1) dans la direction opposée à l'extrémité proximale (15b ; 16b) du bras respectif (15 ; 16) sur lequel la buse individuelle (11a) est disposée.

2. Dispositif selon la revendication 1, **caractérisé en ce que** le premier bras (15) et/ou le deuxième bras (16), de préférence les deux bras (15 ; 16), sont de forme incurvée.

3. Dispositif selon la revendication 1 ou 2, **caractérisé en ce qu'**un grand nombre de buses (11) est disposé sur la pomme de douche (1), de préférence sur un ou deux bras (15 ; 16) de la pomme de douche (1).

4. Dispositif selon une ou plusieurs des revendications précédentes, **caractérisé en ce que** le moyen d'accouplement (4) est conçu pour coopérer avec un tuyau à eau, de préférence avec un tuyau de jardin classique.

5. Dispositif selon une ou plusieurs des revendications précédentes, **caractérisé en ce qu'**au moins une brosse (13), de préférence un grand nombre de brosses (13), sont disposés sur l'un au moins des bras (15 ; 16) de la pomme de douche (1) ; la brosse (13) ou les brosses (13) s'étendant jusque dans l'espace intérieur (17) de la pomme de douche (1).

6. Dispositif selon la revendication 5, **caractérisé en ce que** la brosse (13) ou les brosses (13) sont prévues sur au moins un des bras (15 ; 16) de la douche (1) au moyen d'au moins un logement de brosse (12), de préférence au moyen d'autant de logements de brosse (12) que de brosses (13), le logement de brosse (12) ou les logements de brosse (12) étant conçus pour récupérer les brosses (13) depuis l'espace intérieur (17) et les faire sortir à nouveau jusque dans l'espace intérieur (17).
